# EUROPEAN PATENT APPLICATION

(11) **EP 3 120 930 A1**
(43) Date of publication of application: **25.01.2017**
(21) Application number: 15764444.4
(22) Date of filing: 19.03.2015
(51) Int. Cl.: B01L 3/02, B25J 9/06, B25J 13/00, G01N 1/00

(54) **PIPETTE DEVICE AND LIQUID TREATMENT SYSTEM**

(30) Priority: 20.03.2014 JP 2014058966
(71) Applicant: National Institute Of Advanced Industrial Science, Tokyo 100-8921 (JP); Robotic Biology Institute Inc., Meguro-ku, Tokyo 152-0022 (JP)
(72) Inventor: SASAKI Naoyuki, Tokyo 135-0064 (JP); NATSUME Tohru, Tokyo 135-0064 (JP)
(74) Representative: D Young & Co LLP
(86) International application number: PCT/JP2015/058191
(87) International publication number: WO 2015/141764

(57) **Abstract**

Provided is a pipette device that can discharge or withdraw a liquid easily by liquid processing operation by a robot device. Provided is a pipette device held by a robot device, comprising a driving part for withdrawing and/or discharging a liquid, a signal receiving part for receiving a signal from the robot device and a control part for controlling the driving part according to the signal.

## Description

### Technical Field

The present invention relates to a pipette device and a liquid processing system. More specifically, it relates to a pipette device or the like held by a robot device.

### Background Art

Various kinds of pipettes have been used in the fields such as biology and chemistry, for example, as a device for aliquoting liquid quantitatively. In particular, pipette devices for withdrawal or discharge of a particular amount of liquid by manual or electric movement of its internal plunger have been used favorably in liquid aliquoting operation, as liquid metering is easier.

For example, Patent Document 1 discloses "a pipette device, comprising a pipette case, a slide shaft that moves vertically by button-pushing operation, a plunger placed under the slide shaft, at least one spring that pushes the plunger upward, an engaging body that is engaged coaxially with the slide shaft and extends through a hole in the case movably at least vertically, and an electric motor that is installed at a shaft center position different from the shaft center of the slide shaft and connected and engaged operably to the engaging body." In the pipette device, manual and electrical operations can be used switchably, as liquid withdrawal and discharge are performed, as its slide shaft and plunger are moved vertically by button-pushing operation during manual operation and the engaging body is moved vertically as driven by the motor and thus the plunger is moved vertically during electrical operation.

### Citation List

### Patent Literature

[Patent Document 1] JP-A No. 2002-113373

### Summary of the Invention

### Technical Problem

By the way, robot devices that can perform liquid processing operations, including the liquid aliquoting operation described above, are now under development. Some of the robot devices can manipulate a laboratory experimental device with their arm parts. However, although the arm part in such a robot device can hold an article and manipulate a pipette device by pushing operation, it was often difficult for the arm part to push the operation button installed in the pipette device accurately.

Accordingly, a major object of the present invention is to provide a pipette device that can discharge or withdraw a liquid easily during liquid processing operation by a robot device.

### Solution to Problem

To solve the problems above, the present invention provides a pipette device held by a robot device, comprising a driving part for withdrawing and/or discharging a liquid, a signal receiving part for receiving a signal from the robot device, and a control part for controlling the driving part according to the signal.

The pipette device may comprise a tip connecting part for connecting a tip to be in contact with the liquid, an information acquiring part for acquiring information on the position of the tip in the state where it is connected to the tip connecting part and information on the state of the driving part, and a signal transmitting part for transmitting the information on the position of the tip and the information on the state of the driving part to the robot device.

The driving part may have a plunger and information on the state of the driving part may include information on the position of the plunger.

The information on the position of the tip may be based on the distance between the tip and any one or more articles present in the range in which the tip is movable by the robot device.

The information acquiring part may have an internal pressure sensor for detecting the pressure applied into the tip. The information acquiring part may have additionally a pressure sensor for detecting the pressure applied to the surface of the tip connecting part in contact with the tip.

The information acquiring part may acquire the information on liquid state and the signal transmitting part may transmit the information on liquid to the robot device.

The rate of withdrawing the liquid into the tip and/or the rate of discharging the liquid contained in the tip may be controlled based on the signal and the information on the state of the driving part.

In addition, the timing of the liquid withdrawal and/or discharge may be controlled by the signal above.

The control part may control the driving part by radio communication.

The present invention also provides
a liquid processing system having a robot device and a pipette device held by the robot device,
the pipette device comprising a driving part for withdrawing and/or discharging a liquid, a signal receiving part for receiving a signal from the robot device, and a control part for controlling the driving part according to the signal.

The pipette device may comprise a tip connecting part for connecting a tip to be in contact with the liquid, an information acquiring part for acquiring information on the position of the tip in the state where it is connected to the tip connecting part and information on the state of the driving part, and a signal transmitting part for transmitting the information on the position of the tip and the information on the state of the driving part to the robot device, and the operation of the robot device may be controlled based on the information on the position of the tip and the information on the state of the driving part.

The robot device may have an arm part and the arm part may have multiple joints.

Further, the robot device may have a control panel and a computer.

The computer may comprise one or more parts selected from the group consisting of an input part, a signal transmitting part, a signal receiving part, a display part, a control part, and a memory part.

### Advantageous Effects of Invention

The present invention provides a pipette device that can discharge or withdraw a liquid easily during liquid processing operation by a robot device.

### Brief Description of Drawings

Fig. 1 is a chart showing the configuration of a liquid processing system in the first embodiment of the present invention.
Fig. 2 is a schematic view showing the configuration example of the robot device of the first embodiment.
Fig. 3 is a schematic view showing the configuration example of the pipette device of the first embodiment.
Fig. 4 is a flowchart showing the summary of the liquid processing method used in the liquid processing system of the first embodiment.
Fig. 5 is a flowchart showing the summary of the tip positioning step in the liquid processing system.
Fig. 6 is a flowchart showing the summary of the liquid withdrawing step in the liquid processing system.
Fig. 7 is a flowchart showing the summary of the liquid dispensing step in the liquid processing system.
Fig. 8 is a schematic view showing the configuration example of a pipette device placed in the liquid processing system in a modified embodiment of the first embodiment.
Fig. 9 is a flowchart showing the summary of the liquid processing method used in the liquid processing system in a modified embodiment of the first embodiment.
Fig. 10 is a flowchart showing the summary of the tip connection step in the liquid processing system.
Fig. 11 is a flowchart showing the summary of the liquid withdrawing step in liquid processing system of the second embodiment.
Fig. 12 is a chart showing the summary of the liquid processing system in the third embodiment.
Fig. 13 is a schematic view showing the configuration example of the pipette device of the third embodiment.
Fig. 14 is a flowchart showing the summary of the liquid processing method in the liquid processing system of the third embodiment.
Fig. 15 is a flowchart showing the summary of the liquid state information-acquiring step in the liquid processing system of the third embodiment.
Fig. 16 is a flowchart showing an example of an error handling method in the liquid processing system.
Fig. 17 is a schematic view showing the summary of the configuration of the liquid processing system according to the present invention.
Fig. 18 is a schematic view showing the configuration example of the pipette device according to the present invention.

### Description of Embodiments

Hereinafter, favorable embodiments of the present invention will be described. The embodiments described below are typical embodiments of the present invention and it should be understood that the scope of the present invention is not restricted by these embodiments.

### 1. Liquid processing system in the first embodiment of the present invention

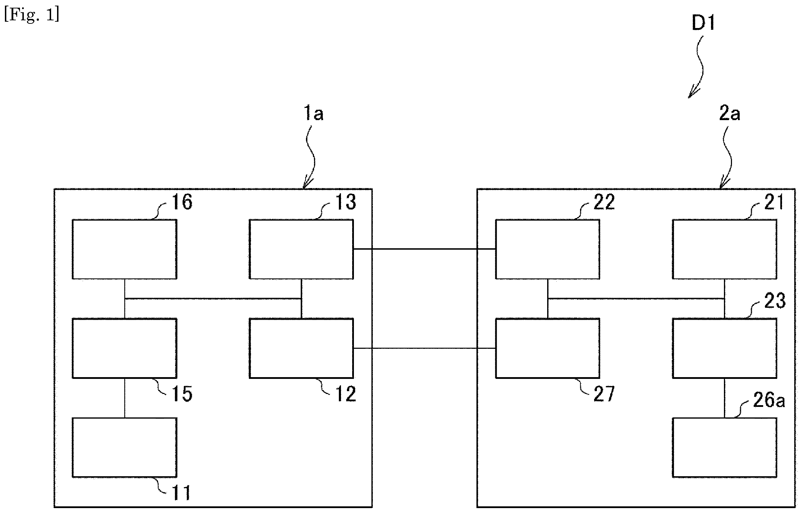

Fig. 1 is a chart showing the configuration of the liquid processing system in the first embodiment of the present invention. The liquid processing system indicated by code D1 in Fig. 1 has roughly a robot device 1a and a pipette device 2a held by the robot device 1a. The configuration of the liquid processing system D1 will be described one by one with reference to Figs. 1 to 3.

### <Robot device>

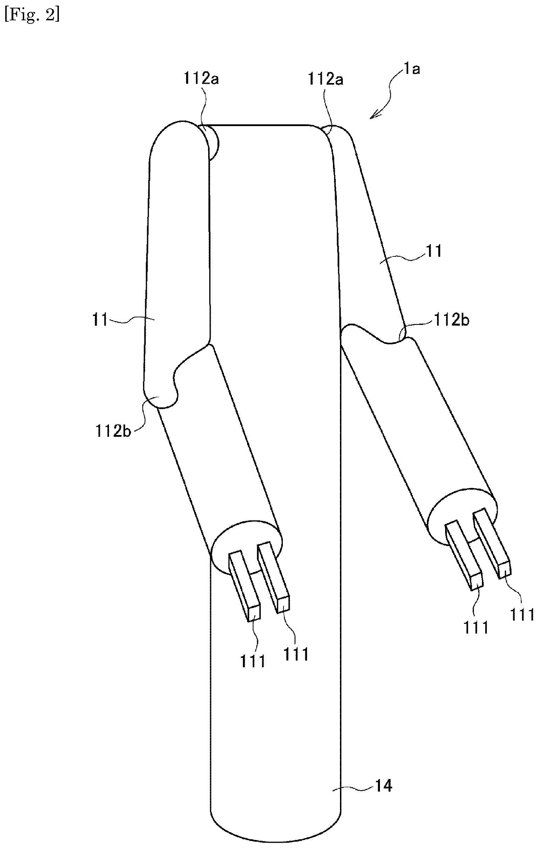

First, the robot device 1a will be described. The robot device 1a in the liquid processing system D1 of the present embodiment is configured to hold the pipette device 2a and move the pipette device 2a to a desired location during liquid withdrawal or discharge by the pipette device 2a described below. Fig. 2 shows schematically an example of the configuration of the robot device 1a. As shown in Fig. 2, the robot device 1a in the present embodiment may be configured to have arm parts 11 for movement of the pipette devices 2a held. The robot device 1a may have additionally a body part 14 for support of the arm parts 11. The configuration of the signal receiving part 12, the signal transmitting part 13, and the control part 15 described below is not shown in Fig. 2.

In addition, the arm part 11 may be configured to have, for example, claw parts 111 for holding the pipette device 2a at the terminal. Further, the arm part 11 preferably has multiple joints 112a and 112b. It is possible to make the arm part 11 manipulate complicated operations with the multiple joints 112a and 112b. The robot device 1a shown in Fig. 2 has arm parts 11 each having two joints 112a and 112b. In the robot device 1a of the present embodiment, the number of the joints 112a and 112b formed in the arm part 11 is not particularly limited if it is plural, and may be determined arbitrarily according to the complexity, for example, of the operations conducted by the robot device 1a.

The number of the arm parts 11 in the robot device 1a is one or more, but the robot device 1a preferably has multiple arm parts 11. When the robot device has multiple arm parts 11, even if one arm part 11 holds the pipette device 2a, it can manipulate another device simultaneously. Thus, for example, when the pipette device 2a withdraws a liquid, the other arm part 11 can tilt the container containing the liquid. When the robot device 1a has multiple arm parts 11, the shapes of the multiple arm parts 11 may be different from each other. The shape of each arm part 11 can be designed appropriately according to the operation manipulated by the arm part 11.

The robot device 1a has additionally a signal receiving part 12 for receiving a signal from the pipette device 2a described below and a signal transmitting part 13 for transmitting a signal to the pipette device 2a (see Fig. 1). The signal receiving part 12 and the signal transmitting part 13 used may be, for example, communication devices.

The robot device 1a may have additionally a control part 15 for controlling the entire robot device 1a, an input part for inputting an operation program and the like of the robot device 1a by the user, a display part for displaying the content of the operation program and the like (the input part and display part are not shown in Fig. 1).

The control part 15 may have a configuration properly selected from known configurations, for example, according to the structure and the installation site of the robot device 1a. The control part 15 may be, for example, a microcomputer, a microprocessor, a sequencer (PLC: programmable logic controller), or a relay control board. Alternatively, a robot controller or a general-purpose computer may be used as the control part 15.

In this way, the control part 15 may be configured to have only one device or multiple devices. An example of the multiple devices is a combination of a robot controller, a sequencer, and a general-purpose computer. In this case, the multiple devices cooperatively or independently conduct operations needed for control of the robot device 1a and the pipette device 2a. However, for example, the rate of these operations shared by these multiple device is not particularly limited.

The input part and the display part may also have a configuration properly selected from known configurations, for example, according to the structure and the installation site of the robot device 1a. The input part may be, for example, a mouse, a keyboard, a touch panel, a button, a switch, lever, or a teaching operation terminal (teaching pendant). The display part may be, for example, a display or a printer.

Further, the robot device 1a may have additionally a memory part 16 for storage of the operation program and the data on the amount of the liquid withdrawn and discharged by the pipette device 2a. The memory part 16 may be selected properly from known memory media, for example, according to the structure and the installation site of the robot device 1a. Examples of the memory media include magnetic memory media, optical memory media, magneto-optical memory media, and the like. Examples of these memory media include hard disks (hard disk drives), flash memories, solid state drives (SSDs), and the like. In addition, the operation program, the set values for example on the amount of the liquid withdrawn or discharged by the robot device 1a, and the like may be stored for example on a magnetic disk such as a flexible disk (FD), an optical disk such as a compact disk (CD) or a digital versatile disc (DVD), or a magnetic optical disk such as a magneto-optical disk (MO), and read by the control part 15, as such a disk is inserted into a drive and the drive is connected to the control part 15.

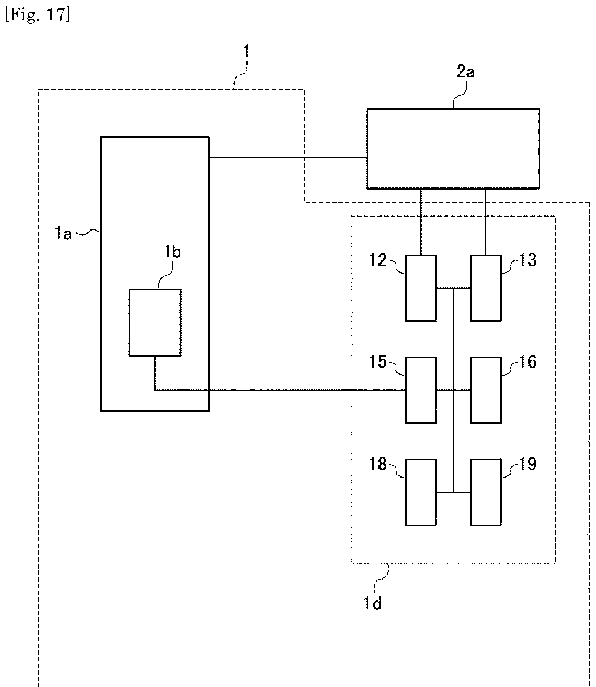

The function of one or more of the signal receiving part, the signal transmitting part, the control part, the input part, the display part, and the memory part may be conducted by a general-purpose computer. For example, the present invention may have the configuration shown in Fig. 17. Herein, the robot device 1a, the control panel 1b, and the general-purpose computer 1d are collectively called a robot part 1. The robot part may be connected to the pipette device wirelessly. Thus, the robot 1b and the computer 1d may be connected to the pipette device 2a via a wireless network.

The control panel 1b may be integrated into the robot device 1a.

### <Pipette device>

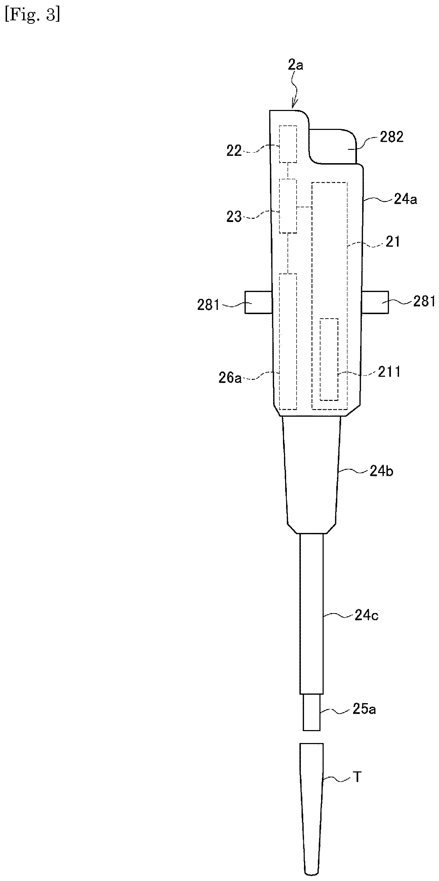

Hereinafter, the pipette device 2a will be described with reference to Figs. 1 and 3. Fig. 3 is a schematic view showing a configuration example of the pipette device 2a in the present embodiment. The pipette device 2a has, at least, a driving part 21 for withdrawing and/or discharging a liquid, a signal receiving part 22 for receiving a signal from the robot device 1a, and a control part 23 for controlling the driving part 21. Cases 24a, 24b, and 24c are casings for storage of these parts, the information acquiring part 26a described below, and others. Although the control part 23 is placed in the case 24a in Fig. 3, the control part 23 may be placed outside the cases 24a, 24b, and, 24c. The pipette device 2a preferably has a tip connecting part 25a for connecting a tip T to be in contact with liquid, an information acquiring part 26a for acquiring information on the position of the tip T in the state where it is connected to the tip connecting part 25a and information on the state of the driving part 21, and a signal transmitting part 27 for transmitting the information on the position of the tip T and the information on the state of the driving part 21 to the robot device 1a (see Fig. 1). The pipette device 2a may have additionally holding parts 281 for allowing the robot device 1a to hold the pipette device 2a, for example using the claw parts 111 (see Fig. 3).

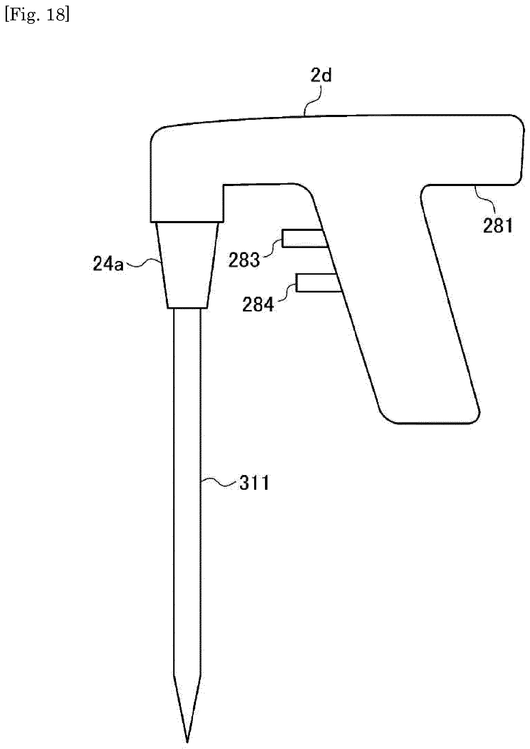

Although the pipette device 2a is designed to withdraw and/or discharge a small amount of liquid, for example of about 0.1 µl to 1 ml, it may be used as a pipette device 2d for measuring pipette as shown in Fig. 18. When the pipette device 2d is held at the holding part 281 by the robot device 1a and a measuring pipette 311 is connected to the case 24a, the liquid is withdrawn as the withdrawal button 283 is pressed and the liquid is discharged as the discharge button 284 is pressed.

Hereinafter, the configuration of the pipette device 2a will be described in detail.

### <Driving part>

In the pipette device 2a, the driving part 21 is configured to withdraw the liquid stored in a container or the like into the tip T and discharge it out of the tip T. The driving part 21, which has a plunger 211, withdraws a particular amount of liquid into the tip T connected to the tip connecting part 25a described below and discharge the particular amount of liquid out of the tip T, as air is introduced into and discharged out of the cylinder by movement of the plunger 211. The power source for movement of the plunger 211 is not particularly limited if it is a power source that can be installed within the case 24a, 24b, or 24c. The power source is, for example, a stepping motor. The driving part 21 has additionally a power transmission mechanism for transmitting the power from the power source, such as a motor, to the plunger 211. In addition, the driving part 21 may have a configuration selected arbitrarily from the configurations of known manual and electric pipette devices, for example, according to the size of the pipette device 2a and the properties of the liquid processed.

In the present invention, the liquid is not particularly limited if it is a liquid, and the components thereof are also not particularly limited. Examples of the liquid include distilled water, cell culture solutions, physiological saline, liquid containing various reagents such as primers and antibodies as they are dissolved, and the like. Examples of the liquid also include biological liquid samples such as blood, blood serum, blood plasma, bone marrow fluid, and urine. Examples of the liquid also include gels.

### <Signal receiving part>

In the pipette device 2a, the signal receiving part 22 is an interface for receiving a signal from the robot device 1a. The signal is, for example, a signal for controlling the timing of the liquid withdrawal or discharge by the pipette device 2a. Alternatively, it can also receive data sent from the robot device 1a concerning, for example, the amount of the liquid withdrawn to the tip T, the amount of the liquid discharged from the tip T, the rate of withdrawing the liquid to the tip T, and the rate of discharging the liquid contained in the tip T from the tip T.

### <Control part>

The control part 23 is configured to withdraw or discharge a liquid by controlling the operation of the driving part 21 according to the signal received by the signal receiving part 22. The control part 23 can also be configured to control the entire pipette device 2a. The control part 23 can be selected properly from known configurations. The control part 23 is, for example, a microcomputer, a microprocessor, a sequencer (PLC: programmable logic controller), or the like. Alternatively, the control part 23, the signal receiving part 22 described above, and the signal transmitting part 27 described below may be configured to be, for example, a general-purpose computer equipped with CPU, memory, hard disk, communication device, and others.

The control part 23 preferably controls the driving part 21 by radio communication. If the control part 23 installed outside the cases 24a, 24b, and 24c communicates with the driving part 21 wirelessly, there is no need for connecting the control part 23 and the driving part 21 with a cable or the like. Thus, when the arm part 11 moves, as it holds the holding part 281 of the pipette device 2a, there is no restriction in travelling distance caused by the cable and no concern about the cable becoming in contact with an article installed on the arm part 11 or around the arm part 11. It is possible to use radio communication, for example, by using wireless local area network (LAN) or a communication card for wireless USB (WUSB). In addition, a battery, as a power source for the driving part 21 and others, is preferably installed in the case 24a, 24b, or 24c. When the power source is installed in the case 24a, 24b, or 24c, there is no need for connecting the power source to the driving part 21 and the like with a cable, leading to improvement in operability of the pipette device 2a by the robot device 1a. When the battery is installed in the case 24a, 24b, or 24c, information on the content of the battery may also be configured to be sent from the pipette device 2a to the robot device 1a.

### <Tip connecting part>

The tip connecting part 25a is configured to be connected to the tip T that becomes in contact with the liquid during liquid withdrawal or discharge. The tip T is detachably connected to the tip connecting part 25a. The configuration of the tip connecting part 25a is not particularly limited if it can be connected to the tip T, and the shape thereof can be designed arbitrarily according to the tip T used. For example, it is possible to put the tip T on the tip connecting part 25a and thus connect the tip T to the tip connecting part 25a, by making the external diameter of a tubular tip connecting part 25a smaller than the inner diameter of the tip T.

The tip T to be connected to the tip connecting part 25a may be any known pipette tip, for example, made of a synthetic resin. If the tip T is disposable, even when multiple kinds of liquids different for example in composition are processed in a single pipette device 2a, it is possible to prevent mutual contamination of these liquids.

### <Information acquiring part>

The information acquiring part 26a is configured to acquire at least, "information on the position of the tip T" and "information on the state of the driving part 21" in the state where the tip T is connected to the tip connecting part 25a. In the liquid processing system D1 of the present embodiment, it is preferable that these two kinds of information be transmitted from the signal transmitting part 27 of the pipette device 2a to the robot device 1a and the operation of the robot device 1a be controlled based on these two kinds of information. In other words, the robot device 1a is preferably feedback-controlled based on the information transmitted from the pipette device 2a.

The information on the position of the tip T is, for example, the information on the position of the distal end of the tip T when the robot device 1a holds the holding part 281 of the pipette device 2a and can be expressed along the coordinate axes such as of X, Y, and Z. The information on the state of the driving part 21 is not particularly limited if it is information concerning the state of the driving part 21. It may be information on the position of the plunger or information on the acceleration of the plunger, for example. When the driving part 21 described above has a stepping motor, the information on the state of the driving part 21 may be pulse number of the stepping motor or rotational frequency of the actuator equipped with the stepping motor, for example. The information on the state of the driving part 21 acquired by the information acquiring part 26a preferably contains at least information on the position of the plunger 211 for the reason described below. The information on the position of the plunger 211 may be information on the position of the plunger 211 relative to the cylinder storing the plunger 211, for example.

The information acquiring part 26a is not particularly limited if it is configured to acquire at least the two kinds of information above, and the configuration thereof is not particularly limited. For example, the information acquiring part 26a preferably has a sensor for acquiring the information. The sensor installed in the information acquiring part 26a may be selected appropriately from known sensors according to the size of the pipette device 2a and the kind of the liquid processed. The information acquiring part 26a may have multiple sensors different in the substance detected or detection method. When the information acquiring part 26a has multiple sensors, the sensors used may be switched according to the information acquired. Alternatively, multiple sensors may be used simultaneously for acquisition of one kind of information.

The information acquiring part 26a can, for example, send as information a value such as the pressure detected by the sensor, as it is, to the signal transmitting part 27. Alternatively, the information acquiring part 26a can decide whether the value or the like detected by the sensor is larger than a predetermined standard value and can acquire the decision result as information.

Examples of the sensors for acquiring the information on the state of the driving part 21 include image sensors, distance sensors, acceleration sensors, and the like. Examples of the distance sensors include photoelectric laser sensors, ultrasonic sensors, electrostatic sensors, and the like. Multiple sensors among the sensors above may be installed in the information acquiring part 26a.

Examples of the sensors for acquisition of the information on the position of the tip T include pressure sensors, image sensors, distance sensors, and the like. Examples of the distance sensors include photoelectric laser sensors, ultrasonic sensors, electrostatic sensors, and the like. Multiple sensors among the sensors above may be installed in the information acquiring part 26a.

The information on the position of the tip T acquired by the information acquiring part 26a may be a value based on the distance between the tip T and any one or more articles present within the range in which the tip T connected to the tip connecting part 25a is movable by the robot device. The article present within the movable range of the tip T is, for example, an article placed on the floor or workbench around the robot device 1a and a typical example thereof is an experimental device, an experimental instrument, or the like. Alternatively, the article is, for example, a liquid-containing container, a liquid-aliquoting tube or vial, or the like.

In the robot device of the present embodiment, because the pipette device 2a is not fixed to the arm part 11 of the robot device 1a, another experimental device may be operated when the pipette device 2a is not held. In such a case, another experimental device is placed around the arm part 11. It is laborsome for the user to locate multiple experimental devices and others at predetermined positions at high accuracy. In the liquid processing system D1 in the present embodiment, for example even when another experimental device is not placed at a predetermined position, it is possible to prevent contact of the tip T with the other experimental device by controlling operation of the robot device 1a by means of transmitting the information on the position of the tip T to the robot device 1a. By transmitting to the robot device 1a the fact that tip T is in contact with another experimental device as information, it is also possible to make the robot device 1a prevent contamination of the liquid in the container caused by contact with the used tip T.

In addition, the information acquiring part 26a preferably has an internal pressure sensor for detection of the pressure applied into the tip T, for example. It is possible to acquire the information on the position of the tip T based on the change in pressure of the liquid-containing container detected by the internal pressure sensor. In this case, the information on the position of the tip T may be information based on the distance between the liquid surface in the container and the distal end of the tip T, for example. It is also possible, by monitoring the internal pressure of the tip T with an internal pressure sensor, to decide whether the connection state of the tip T to the tip connecting part 25a is adequate for example during liquid withdrawal. It is also possible to acquire the information on the state of the liquid described below by the internal pressure sensor.

### <Signal transmitting part>

In the pipette device 2a, the signal transmitting part 27 is an interface for transmission of data to the robot device. The data include the information on the position of the tip T when the tip is in contact with the tip connecting part 25a and the information on the state of the driving part 21 acquired by the information acquiring part 26a. In the robot device 1a, the control part 15 can, for example, control operation of the arm part 11 and others based on the information.

### 2. Liquid processing by the liquid processing system in the first embodiment

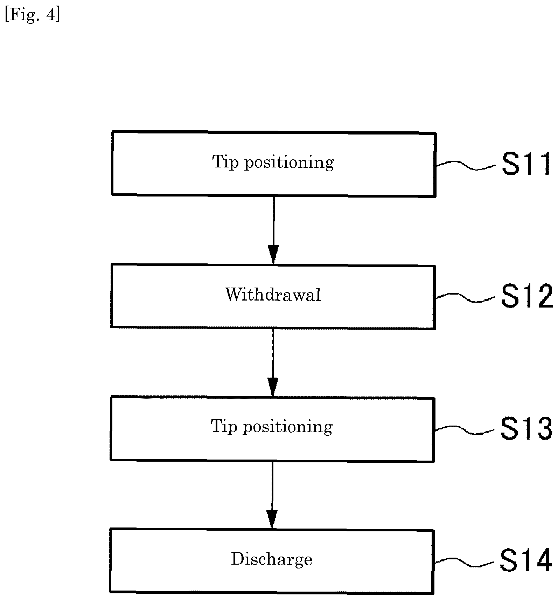

Operations of the liquid processing system D1 in the present embodiment will be described below. Specifically, liquid processing method used in the liquid processing system D1 will be described. Fig. 4 is a flowchart showing the summary of the entire liquid processing operations carried out in the liquid processing system D1. As shown in Fig. 4, the liquid processing method comprises a tip positioning step S11, a liquid withdrawal step S12, a tip positioning step S13, and a liquid discharge step S14. The liquid processing system D1 of the present embodiment can be used favorably in liquid aliquoting operation, as a particular amount of liquid is withdrawn and discharged, but it can also be used, for example, in operation for liquid agitation by withdrawing and discharging liquid repeatedly or in operation for removing a particular layer of liquid placed in the container by withdrawing it alone. Thus, application of the liquid processing system D1 in the present embodiment is not limited to liquid aliquoting.

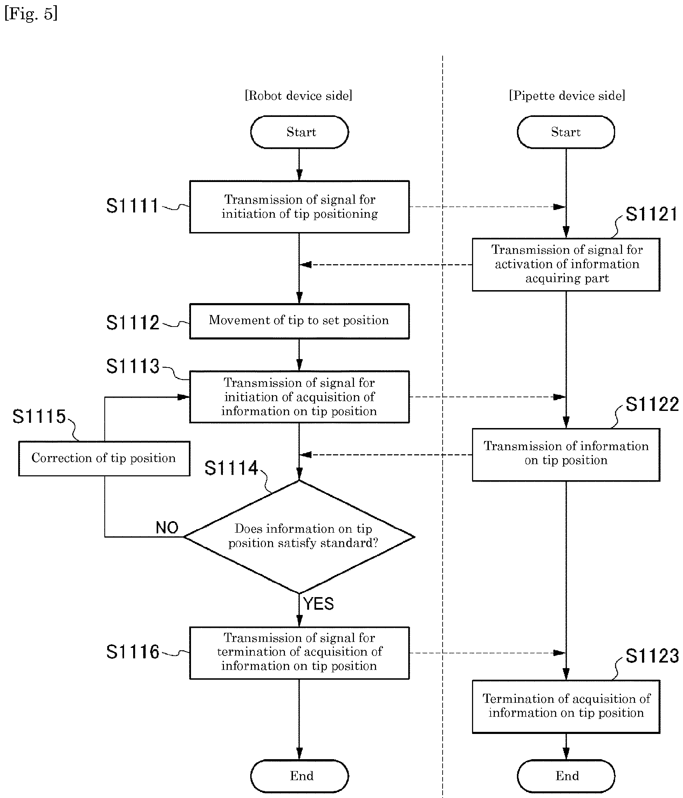

Fig. 5 is a flowchart showing the summary of the tip positioning step S11 in the liquid processing system D1. The tip T-positioning step S11 will be described in detail with reference to Fig. 5.

First in the liquid processing system D1, the robot device 1a transmits a signal for initiation of the positioning of the tip T connected to the pipette device 2a (Fig. 5, S1111). On receiving the signal, the pipette device 2a activates the information acquiring part 26a (Fig. 5, S1121) and transmits its activation to the robot device 1a. On receiving the signal, the robot device 1a initiates tip positioning, locating the pipette device 2a to make the tip T move to a particular position previously determined (set coordinates) (Fig. 5, S1112). The set coordinates, for example along coordinate axes X, Y, and Z, can be stored, for example, in the memory part 16.

During the tip T is moved to the set position, the information acquiring part 26a may transmit the information on the position of the tip T continuously to the robot device 1a. In this case, the information on the position of the tip T may be information based on the distance between the tip T and one or more articles present within the range in which the tip T is movable by the robot device 1a. The article was described above. The information acquiring part 26a preferably has a distance sensor or an image sensor for prevention of contact of the tip T with the article in the step S1112.

After the tip T is moved to the coordinates previously set in the robot device 1a, the robot device 1a transmits initiation of acquisition of the information on the position of the tip T to the pipette device 2a (Fig. 5, S1113). The pipette device 2a that receives the signal acquires the information on the position of the tip T by the information acquiring part 26a and transmits the information to the robot device 1a (Fig. 5, S1122).

Then, in step S1112, if the information acquiring part 26a acquires the information on the position of the tip T and transmits it to the robot device 1a, the information acquiring part 26a can change the content of the information on the position of the tip T early in the step S1113. Specifically, the information on the position of the tip T may be changed from that based on the distance between the tip T and an article present within the range in which the tip T is movable to that based on the distance between the tip T and liquid surface of the container or the bottom face of the container. For example, if the information acquiring part 26a has multiple kinds of sensors, the sensor used may be altered according to the signals transmitted in each of steps S1112 and S1113. For example, the information acquiring part 26a of the pipette device 2a that received the signal in step S1113 can change the sensor of use from an image sensor to a distance sensor.

It is determined in the robot device 1a whether the information on the position of the tip T satisfies a predetermined standard (Fig. 5, S1114). If it satisfies the standard, a signal for terminating acquisition of the information on the position of the tip is transmitted to the pipette device 2a (Fig. 5, S1116). The pipette device 2a terminates acquisition of the information on the position of the tip (Fig. 5, S1123), and thus, the tip T positioning operation terminates.

Alternatively if it does not satisfy the standard, the robot device 1a corrects the tip T position (Fig. 5, S1115). Specifically, if the distance between the distal end of the tip T and the liquid surface of the container, as determined by the distance sensor present in the information acquiring part 26a, is larger than the standard, the position of the tip T is lowered, as the arm part 11 is actuated, so that the distance satisfies the standard. Alternatively if the distance is smaller than the standard value, the position of the tip T is moved upward so that the distance satisfies the standard.

In the liquid processing system D1, as the steps of transmitting the signal for initiation of acquisition of the information on the position of the tip T (S1113), acquiring the information on the position of the tip T (S1122), comparing the information with standard (S1114), and correcting the tip T position (S1115) are carried out repeatedly, the tip T is moved to a position most favorable for liquid withdrawal in the next step (Fig. 4, S12).

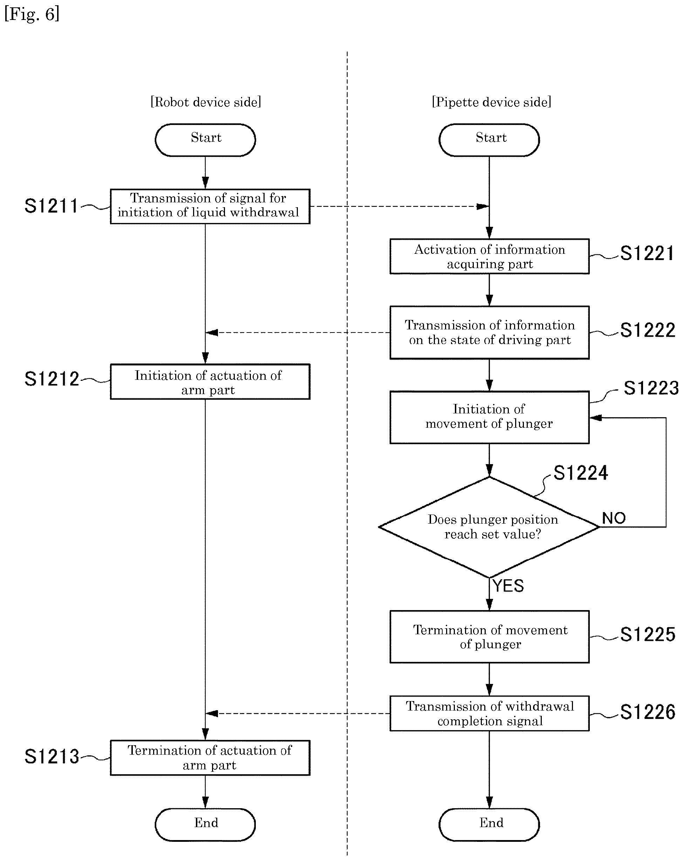

Fig. 6 is a flowchart showing the summary of the liquid withdrawal step S12 in the liquid processing system D1. The liquid withdrawal step S12 will be described in detail with reference to Fig. 6.

First in the liquid processing system D1, the robot device 1a transmits a signal for initiation of liquid withdrawal to the pipette device 2a (Fig. 6, S1211). Preferably, the information on the amount of liquid withdrawal is transmitted with the signal transmitted in the step S1211 from the robot device 1a to the pipette device 2a. In addition, information on liquid withdrawal rate is also preferably transmitted from the robot device 1a to the pipette device 2a. In the pipette device 2a, on receiving the signal, the information acquiring part 26a is activated (Fig. 6, S1221), and the information on the state of the driving part 21 is transmitted to the robot device 1a (Fig. 6, S1222). In the pipette device 2a, movement of the plunger 211 is initiated in the driving part 21 for liquid withdrawal according to the signal (Fig. 6, S1223).

The robot device 1a that has acquired the information on the state of the driving part 21 initiates actuation of the arm part 11 (Fig. 6, S1212). The acquisition of the information from the pipette device 2a continues until a withdrawal completion signal is received from the pipette device 2a (Fig. 6, S1226). For example, the robot device 1a receives the information on the position of the plunger 211 as information on the driving part 21 from the pipette device 2a. Based on the information, the robot device 1a can actuate the arm part 11 and tilt the liquid-containing container according to the liquid withdrawal rate, using another arm part 11 not holding the pipette device 2a. At the same time, the tip T position may be lowered according to the liquid withdrawal rate to the tip T. In this way, in the liquid processing system D1, the robot device 1a and the pipette device 2a can carry out the liquid withdrawal step S12 synchronously.

Meanwhile, in the pipette device 2a, the control part 23 continues to move the plunger 211 based on the information on the state of the driving part 21, for example, until the plunger 211 position reaches a value previously set (Fig. 6, S1224). The set value may be, for example, a value corresponding to traveling distance of the plunger 211 that corresponds to the liquid withdrawal amount. Similarly to the signal for initiation of withdrawal from the robot device 1a, when the set value is transmitted from the robot device 1a to the pipette device 2a, the pipette device 2a can determine the liquid withdrawal amount.

When the traveling distance of the plunger 211 reaches the set value, the pipette device 2a terminated movement of the plunger 211 (Fig. 6, S1225). Then, a signal for termination of liquid withdrawal is transmitted from the pipette device 2a to the robot device 1a (Fig. 6, S1226), the robot device 1a that received the signal terminates actuation of the arm part 11 (Fig. 6, S1213), and thus, the liquid withdrawal operation by the liquid processing system D1 is completed.

After the withdrawal of liquid in the liquid processing system D1, the tip T-positioning step S13 is carried out once again for discharge of the liquid into a desired container or the like. The tip T-positioning operation is the same as that carried out in tip T-positioning step S11 upstream of the liquid withdrawal step S12 described above. Thus, description of the tip positioning step S13 is omitted.

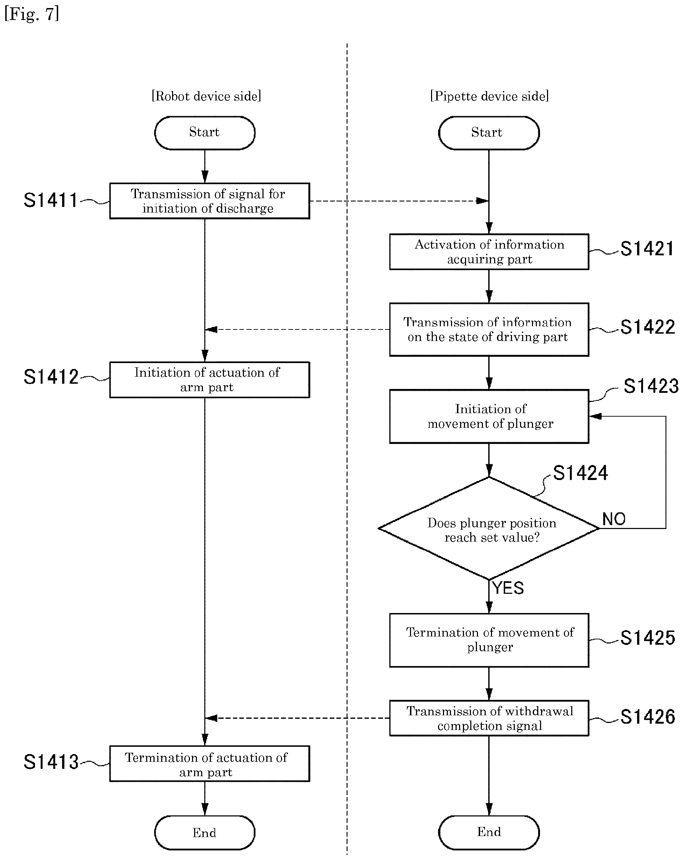

Fig. 7 is a flowchart showing the summary of the liquid discharge step S14 carried out in the liquid processing system D1. The liquid discharge step S14 will be described in detail with reference to Fig. 7.

First in the liquid processing system D1, the robot device 1a transmits a signal for initiation of liquid discharge to the pipette device 2a (Fig. 7, S1411). Information on the liquid discharge amount is preferably transmitted from the robot device 1a to the pipette device 2a with the signal transmitted in the step S1411. In addition, information on liquid discharge rate is preferably transmitted from the robot device 1a to the pipette device 2a. On receiving the signal, the pipette device 2a activates the information acquiring part 26a (Fig. 7, S1421) and information on the state of the driving part 21 is transmitted to the robot device 1a (Fig. 7, S1422). Additionally, in the pipette device 2a, which discharges the liquid according to the signal, the driving part 21 initiates movement of the plunger 211 (Fig. 7, S1423).

The robot device 1a that has obtained the information on the state of the driving part 21 starts actuation of the arm part 11 (Fig. 7, S1412). Acquisition of the information from the pipette device 2a is continued until a discharge completion signal is received from the pipette device 2a (Fig. 7, S1426). For example, the robot device 1a receives information on the position of the plunger 211 as information concerning the driving part 21 from the pipette device 2a. Based on the information, the robot device 1a can drive an arm part 11 and move the liquid-containing container with the other arm part 11 that does not hold the pipette device 2a according to the liquid discharge rate. In addition, the tip T may be moved upward according to the liquid discharge rate from the tip T. In this way, in the liquid processing system D1, it is possible to carry out the liquid discharge step S14 by synchronous operation of the robot device 1a and the pipette device 2a.

Meanwhile, in the pipette device 2a, the control part 23 continues to move plunger 211 based on the information on the state of the driving part 21, for example, until the position of the plunger 211 reaches a set value (Fig. 7, S1424). The set value may be, for example, a value corresponding to the plunger 211-traveling distance corresponding to the liquid discharge amount. As the set value is transmitted from the robot device 1a to the pipette device 2a similarly to the discharge start signal from the robot device 1a, the pipette device 2a can determine the liquid discharge amount.

When the plunger 211-traveling distance reaches the set value, the pipette device 2a terminates movement of the plunger 211 (Fig. 7, S1425). Liquid discharge completion signal is then transmitted from the pipette device 2a to the robot device 1a (Fig. 7, S1426), the robot device 1a that receives the signal terminates actuation of the arm part 11 (Fig. 6, S1413), and the liquid discharge operation by the liquid processing system D1 is completed.

Although a case where the liquid is discharged once was explained in the liquid discharge step S14 described above, the liquid discharge operation may be designed, for example, to aliquot the liquid continuously into multiple containers. In the case too, when the pipette device 2a receives the liquid discharge start signal from the robot device 1a, liquid aliquoting is initiated by the pipette device 2a. A signal for switching between single liquid discharge operation and continuous liquid aliquoting operation may be transmitted additionally from the robot device 1a to the pipette device 2a.

As described above, in the liquid processing system D1 in the present embodiment, the liquid withdrawal start signal and/or the discharge start signal are/is sent from the robot device 1a to the pipette device 2a. As a result, the control part 23 of the pipette device 2 initiate liquid withdrawal and/or discharge according to the signal. In other words, the timing of the liquid withdrawal and/or discharge are/is controlled by the signal transmitted from the robot device 1a. Thus, in the liquid processing system D1 of the present embodiment, the arm part 11 and the claw part 111 in the robot device 1a are not required to operate a button or lever in moving the plunger 211 for liquid withdrawal and/or discharge. It is thus possible to perform liquid withdrawal and/or discharge easily with the pipette device 2a held by the robot device 1a, without assigning the arm part 11 to conduct complicated operations. It is also possible to simplify the configuration of the arm part 11, the claw part 111, and the like, as the complicated operations are not required.

In the liquid processing system D1 of the present embodiment, when the set values of liquid withdrawal and discharge amounts are transmitted from the robot device 1a to the pipette device 2a, there is no need to set liquid amount by inputting it by operation of the pipette side, as it is performed when a known manual or electric pipette is used. Thus, there is no need for the arm part 11 to perform complicated operations of inputting a set value to the pipette and it is thus possible to further simplify the operation program of the liquid processing system D1.

Further in the liquid processing system D1, when the set values of liquid withdrawal and discharge rates are transmitted from the robot device 1a to the pipette device 2a, there is no need for the operation of pushing a button formed in the pipette or the like at a particular rate for example by the claw part 111 and the operation of pulling the button from the pushed-down state to the original position at a particular rate, unlike the case where a known manual pipette is used. Thus, there is no need for the arm part 11 to perform complicated operations and it is thus possible to further simplify the operation program of the liquid processing system D1.

In the liquid processing system D1 of the present embodiment, as it has the information acquiring part 26a for acquiring the information on the position of the tip T, the accuracy in positioning the tip T by the robot device 1a is improved. Thus, for example, even when the liquid amount varies according to the sample, it is possible to withdraw a desired amount of the liquid by correcting the error between the predetermined tip position and the actual liquid surface. Additionally, for example, if the error between the predetermined position and the actual position is obtained, the allowable range of the position of the container or the like to be placed by the user is also widened.

Further in the liquid processing system D1 of the present embodiment, when the information acquiring part 26a acquires the information on the state of the driving part 21, the arm part 11 can be actuated, for example, according to the liquid flow rate during liquid withdrawal and/or discharge. Thus, for example, it is possible to make the robot device 1a conduct complicated pipetting operations such as a manual operation of withdrawing or discharging liquid while placing a suitable distance between the liquid surface and the distal end of the pipette tip, without complicated program additionally prepared.

### 3. Liquid processing system in the modified embodiment of the first embodiment

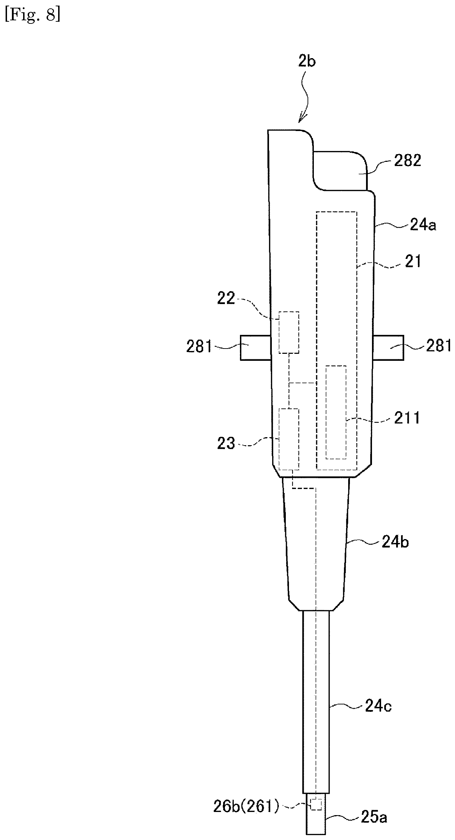

Fig. 8 shows the configuration of the pipette device 2b in the liquid processing system D11 in the modified embodiment of the first embodiment. The pipette device 2b is the same in configuration as the pipette device 2a in the liquid processing system D1 of the first embodiment, except the external pressure sensor 261 installed in the information acquiring part 26b and description on the same configuration will be omitted. The robot device also has the configuration identical with that of the robot device 1a of the first embodiment and the description thereof will be omitted.

As shown in Fig. 8, the information acquiring part 26b has, at least, a pressure sensor that detects the pressure applied to the surface of the tip connecting part 25a in contact with the tip T. In the present embodiment and the embodiments below, the pressure sensor becomes in contact with the tip T on the external surface of the tip connecting part 25a and will be referred to as external pressure sensor 261 for descriptive purpose. As described below, the tip T is connected to the tip connecting part 25a reliably with the external pressure sensor 261. The external pressure sensor used is, for example, a load cell.

In particular, the information acquiring part 26b preferably has the internal pressure sensor described above in addition to the external pressure sensor 261. When the information acquiring part 26b has both of the internal pressure sensor and the external pressure sensor 261, the tip T can be connected to the tip connecting part 25a more reliably.

### 4. Liquid processing by the liquid processing system in a modified embodiment of the first embodiment

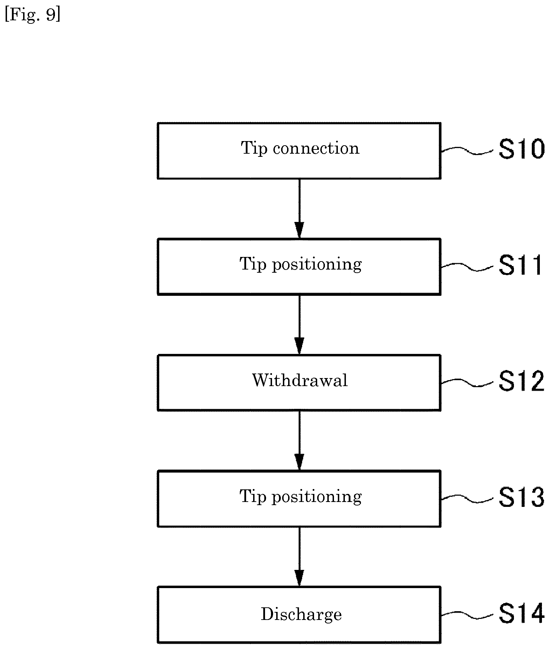

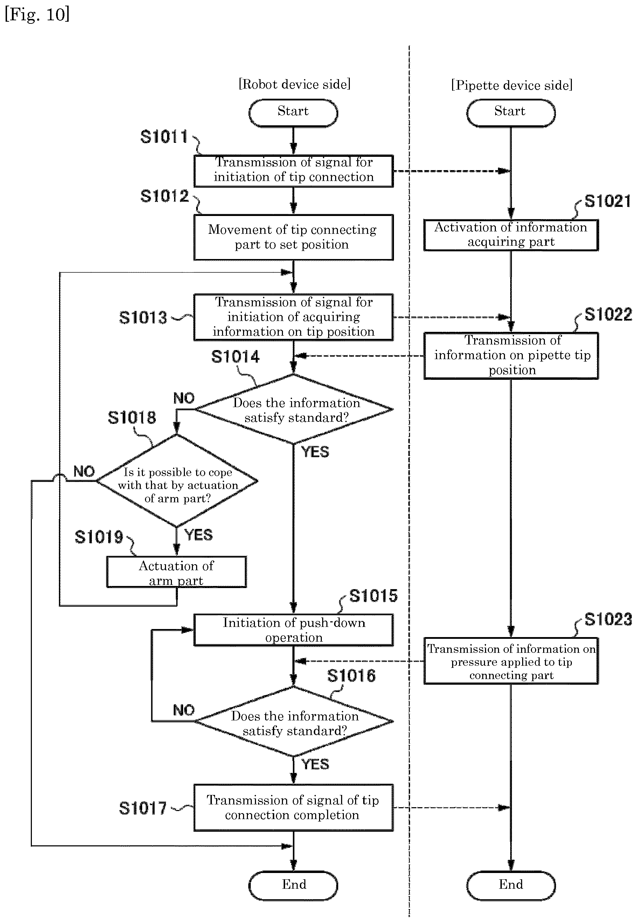

Fig. 9 is a flowchart showing the summary of the operations conducted by the liquid processing system D11 in a modified embodiment of the first embodiment. As shown in Fig. 9 in the present embodiment, a tip connection step S10 is placed upstream of the tip positioning step S11. The tip connection step S10 is a step of connecting a tip T to the tip connecting part 25a of the pipette device 2b. As described above, the tip T used may be, for example, a disposable product. Hereinafter, the tip connection step S10 will be described with reference to Fig. 10. The steps from the tip positioning step S11 to the liquid discharge step S14 are the same as those described above and description thereof is omitted here.

First in the tip connection step S10, the robot device 1a transmits a tip T connection initiation signal to the pipette device 2b (Fig. 10, S1011). On receiving the signal, the pipette device 2b activates the information acquiring part 26b (Fig. 10, S1021). The robot device 1a moves the pipette device 2b held thereby so that the tip connecting part 25a is moved to a predetermined position (set position) (Fig. 10, S1012).

After the movement of the pipette device 2b, the robot device 1a transmits a signal for initiation of acquisition of the information on the position of the tip T (Fig. 10, S1013). On receiving the signal, the pipette device 2b transmits the information on the position of the tip T to the robot device 1a (Fig. 10, S1022). The information on the position of the tip T described here is not the information on the position of the tip T in the state when the tip T is connected to the tip connecting part 25a but is, for example, the information on the position of the tip T in the state when it is stored for example in a tip case. The sensor used in the information acquiring part 26b in step S1022 is preferably a distance sensor or an image sensor. It is possible with the distance sensor or the image sensor to determine the distance between the pipette connecting part 25a and the tip T.

The robot device 1a that has acquired the information on the position of the tip T determines whether the position information satisfies the standard (Fig. 10, S1014). If the standard is satisfied, the robot device 1a initiates operation to push down the pipette device 2b held thereby (Fig. 10, S1015).

If the position information does not satisfy the standard, the robot device 1a decides whether it is possible to cope with the situation by moving the arm part 11 (Fig. 10, S1018). The decision can also be made by establishing a standard and determining whether the position information satisfies the standard. If the robot device 1a decides that it is possible to cope with that, the robot device 1a moves the arm part 11 (Fig. 10, S1019), transmits again a signal for initiation of acquisition of the information on the position of the tip T to the pipette device 2b, and repeats the steps S1013 and S1014 until the information on the position of the tip T satisfies the standard. If it is decided in step S1018 that it is not possible to cope with that by actuation of the arm part 11, the robot device 1a terminates the tip connection step S10.

After the information on the position of the tip T satisfied the standard in step S1014 and the pipette device 2b is started to be pushed down, the pipette device 2b acquires information on the pressure applied to the surface of the tip connecting part 25a in contact with the tip T by the information acquiring part 26b and transmits it to the robot device 1a (Fig. 10, S1023). The information on pressure may be a typical pressure value or a value converted therefrom according to a predetermined rule, and it may be any value, if it is information based on the pressure detected by the external pressure sensor 261.

The robot device 1a determines whether the information on pressure transmitted from the pipette device 2b satisfies the standard (Fig. 10, S1016). If it satisfies the standard, the robot device 1a transmits a tip connection completion signal to the pipette device 2b (Fig. 10, S1017) and completes the tip connection step S10.

Alternatively, if the information on pressure does not satisfy the standard in step S1016, the robot device 1a continues to push down the pipette again and repeats steps S1015 and S1016, until it satisfies the standard.

In the liquid processing system D11 in the present embodiment, the information acquiring part 26b has an external pressure sensor 261, and the connection state between the tip connecting part 25a and the tip T can be confirmed based on the pressure applied to the surface of the tip connecting part 25a in contact with the tip T. It is thus possible to prevent separation of the tip T from the tip connecting part 25a during the liquid withdrawal or discharge and the resulting liquid contamination.

When the information acquiring part 26b has a distance sensor or an image sensor, it is possible to actuate the arm part 11, based on both the information on the preset position for tip T connection and the information on the position of the tip T transmitted from the pipette device 2b. It is thus possible to connect the tip T to the tip connecting part 25a at higher accuracy, compared to the case where the tip T is connected based only on the information on the preset position. Other advantageous effects of the liquid processing system D11 in the present embodiment are the same as those of the liquid processing system D1 of the first embodiment described above.

If the tip T is separated from the tip connecting part 25a, positioning of the tip T relative to a waste collection container or the like can be performed in the tip positioning step S11 shown in Fig. 5. If the waste collection container has a sufficiently large opening, the tip T may be separated without precise positioning, as the pipette device 2b is moved to a position designed to be the site of the tip T disposal by the arm part 11. As for the separation of the tip T, the tip T may be separated from the tip connecting part 25a, as an ejector button 282 for tip separation is installed in the pipette device 2b and the ejector button 282 is pushed for example by a claw part 111 installed in the arm part 11.

### 5. Liquid processing system in the second embodiment of the present invention

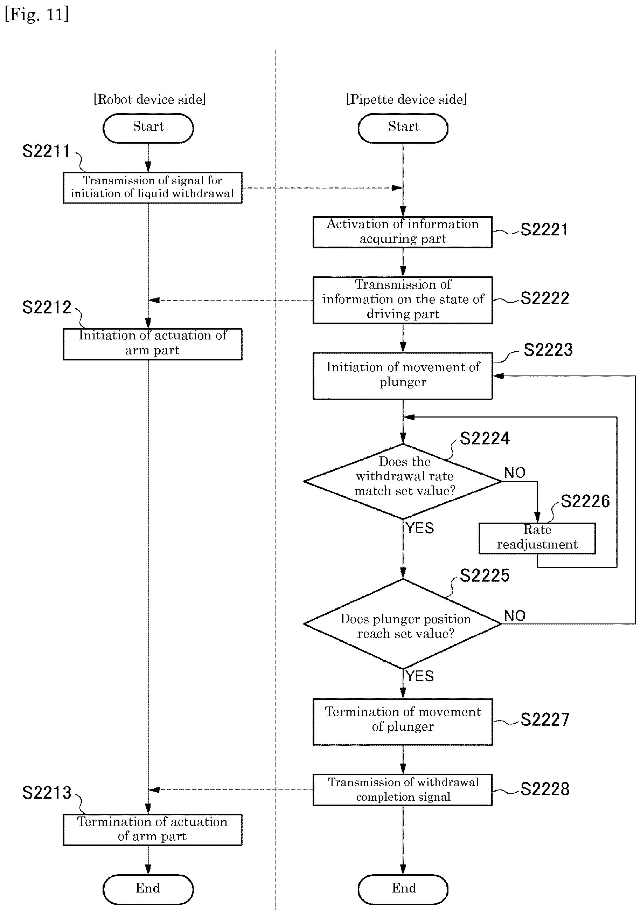

Operations of the liquid processing system D2 in the second embodiment of the present invention will be described with reference to Fig. 11. The configuration of the liquid processing system D2 is the same as that of the liquid processing system D1 in the first embodiment and description thereof will be omitted.

Fig. 11 is a flowchart showing the summary of the liquid withdrawal operation carried out in the liquid processing system D2 of the second embodiment. In the liquid processing system D2, the rate of withdrawing the liquid to the tip T and/or the rate of discharging the liquid stored in the tip T are/is controlled based on the signal from the robot device 1a and the information on the state of the driving part 21.

First in the liquid processing system D2, the robot device 1a transmits a signal for initiation of liquid withdrawal to the pipette device 2a (Fig. 11, S2211). The set values of liquid withdrawal amount and withdrawal rate are also transmitted to the pipette device 2a. On receiving the signal, the pipette device 2a activates the information acquiring part 26a (Fig. 11, S2221) and transmits the information on the state of the driving part 21 to the robot device 1a (Fig. 11, S2222). In the pipette device 2a, the plunger 211 is started to move in the driving part 21 for liquid withdrawal according to the signal (Fig. 11, S2223).

The robot device 1a that has acquired the information on the state of the driving part 21 initiates actuation of the arm part 11 (Fig. 11, S2212). The actuation of the arm part 11 is identical with that in the step S1212 of the liquid withdrawing step shown in Fig. 6.

Alternatively, in the pipette device 2a, the control part 23 continues to move the plunger 211 based on the information on the state of the driving part 21, for example, until the position of the plunger 211 reaches the set value (Fig. 11, S2225). In the liquid processing system D2 of the present embodiment, the control part 23 determines whether the liquid withdrawal rate matches the set value (Fig. 11, S2224) based on the information on the state of the driving part 21 acquired by the information acquiring part 26a. If not, the withdrawal rate is readjusted to the predetermined liquid withdrawal rate, as the actuation of the driving part 21 is controlled (Fig. 11, S2226).

When the plunger 211-traveling distance reaches the set value, the pipette device 2a terminates movement of the plunger 211 (Fig. 11, S2227). Liquid withdrawal completion signal is then transmitted from the pipette device 2a to the robot device 1a (Fig. 11, S2228), actuation of the arm part 11 is terminated (Fig. 11, S2213), and the liquid withdrawal operation by the liquid processing system D2 is completed.

Similarly to the liquid withdrawal described above, set values of liquid discharge amount and liquid discharge rate are transmitted from the robot device 1a to the pipette device 2a for liquid discharge. When the information on the state of the driving part 21 acquired by the information acquiring part 26a does not match the set value, the control part 23 controls the driving part 21, making the discharge rate match the set value.

As described above in the liquid processing system D2 of the present embodiment, liquid withdrawal rate and liquid discharge rate can be feedback-controlled, as the information on the state of the driving part 21 is acquired by the information acquiring part 26a. It is thus possible to withdraw and discharge the liquid at the preset flow rate more reliably. Other advantageous effects of the liquid processing system D2 in the present embodiment are the same as those of the liquid processing system D1 of the first embodiment described above.

### 6. Liquid processing system in the third embodiment of the present invention

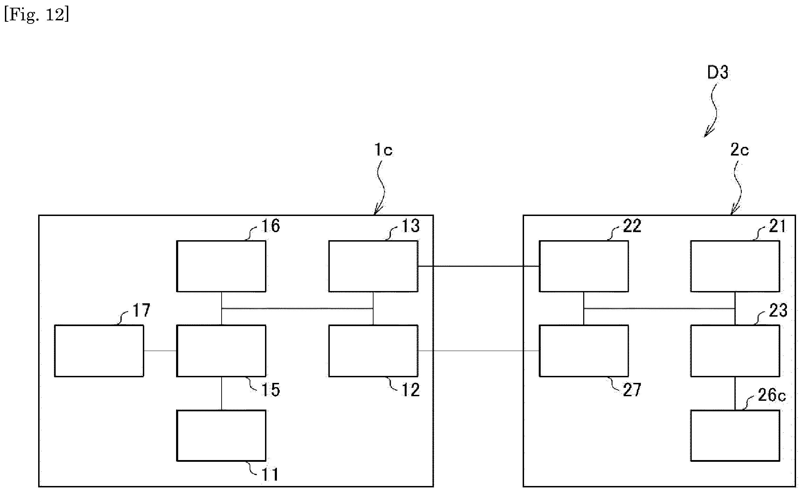

Fig. 12 shows the summary of the configuration of the liquid processing system D3 in the third embodiment of the present invention. The configuration of the robot device 1c in the liquid processing system D3 is the same as the robot device 1a in the liquid processing system D1 of the first embodiment except the analytical part 17; the same parts are indicated by the same codes and description thereof is omitted.

The analytical part 17 shown in Fig. 12 is a part for analysis of the information on liquid state described below. The analytical part 17 used may be, for example, a general-purpose computer having CPU, memories, and others, and, if a general-purpose computer is used as the control part 15, the control part 15 and the analytical part 17 may be configured to be the same general-purpose computer.

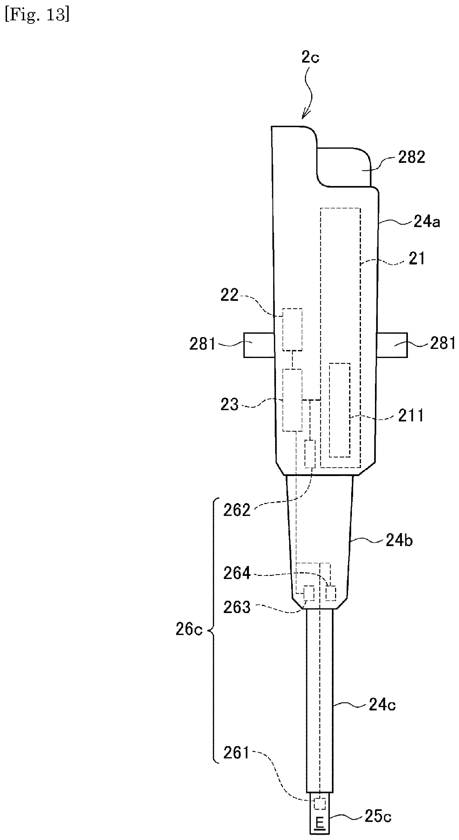

A configuration example of the pipette device 2c is shown in Fig. 13. Among the parts shown in Fig. 13, the parts identical with those in the pipette device 2a in the liquid processing system D1 of the first embodiment are indicated by the same codes and description thereof is omitted.

In the liquid processing system D3, the information acquiring part 26c in the pipette device 2c can acquire the information on liquid. As shown in Fig. 13, the information acquiring part 26c preferably has a sensor for acquiring the information on the state of the liquid in addition to the information described above. The configuration of the sensor may be any sensor selected arbitrarily from known sensors, if it can acquire information on liquid state. Examples thereof include pressure sensors, temperature sensors, pH sensors, optical sensors, absorbance sensors, turbidity sensors, image sensors, distance sensors, and the like. The sensors may be used alone or in combination of two or more.

The information on liquid state includes, for example, presence of air bubbles in liquid, contamination of foreign materials in liquid, liquid viscosity, liquid turbidity, liquid temperature, liquid pH, liquid absorbance, liquid fluorescence intensity, and the like. When the liquid is, for example, a cell culture solution, the information on liquid state may include cell count in the culture solution. The information acquiring part 26c may acquire only one piece or multiple pieces of the information on liquid state described above.

Fig. 13 shows a configuration example of the information acquiring part 26c, which has four kinds of sensors, i.e., a pressure sensor detecting the pressure applied to the surface of the tip connecting part 25c in contact with the tip T (external pressure sensor 261), an internal pressure sensor 262 for detection of the pressure applied into the tip T, an image sensor 263, and a distance sensor 264. The configuration of these sensors is not limited to that shown in Fig. 13 and may be altered arbitrarily according to the size of the pipette device 2c, the property of the liquid processed, the shape of the claw part 111 in the robot device 1c, and the like.

The sensor for acquiring the information on liquid state may be used in combination with the sensor for acquiring the information on the position of the tip T and the information on the state of the driving part 21 described above. When the sensors are used in combination, the robot device 1c may be designed to send a signal for switching the item detected by the sensor to the pipette device 2c according to operation.

In the pipette device 2c, at least area E of the tip connecting part 25c in contact with the tip T is made of a conductive material. Examples of the conductive materials include metals such as gold, platinum, and titanium nitride; carbon; and the like. The tip T connected to the tip connecting part 25c is also preferably a conductive tip T for acquiring the information on liquid state described below. It is possible, by changing the kind of the tip T used, to change the information acquired among the information on liquid state described below. The conductive tip T is, for example, a carbon tip. It is possible, by using such a tip T, to acquire the information on liquid state during liquid withdrawal and liquid discharge in the liquid withdrawing step and the liquid dispensing step.

### 7. Liquid processing by the liquid processing system in the third embodiment

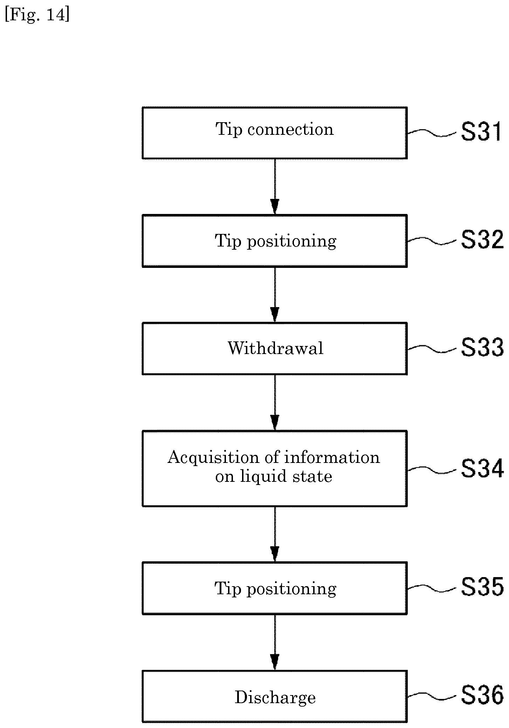

Fig. 14 is a flowchart showing the summary of the liquid processing method used in the liquid processing system D3. As shown in Fig. 14, the liquid processing method comprises a tip connection step S31, a tip positioning step S32, a liquid withdrawal step S33, a step for acquiring the information on liquid state S34, a tip positioning step S35, and a liquid discharge step S36. Among the steps above, the steps except the step for acquiring the information on liquid state S34 are the same as those indicated by the same names in the liquid processing system D1 of the first embodiment. Thus, description of these steps will be omitted. The step for acquiring the information on liquid state S34 is not limited in order of the steps shown in Fig. 14 in the liquid processing method, if the information on liquid state described below can be acquired. For example, the step for acquiring the information on liquid state S34 may be placed upstream of the liquid withdrawal step S33.

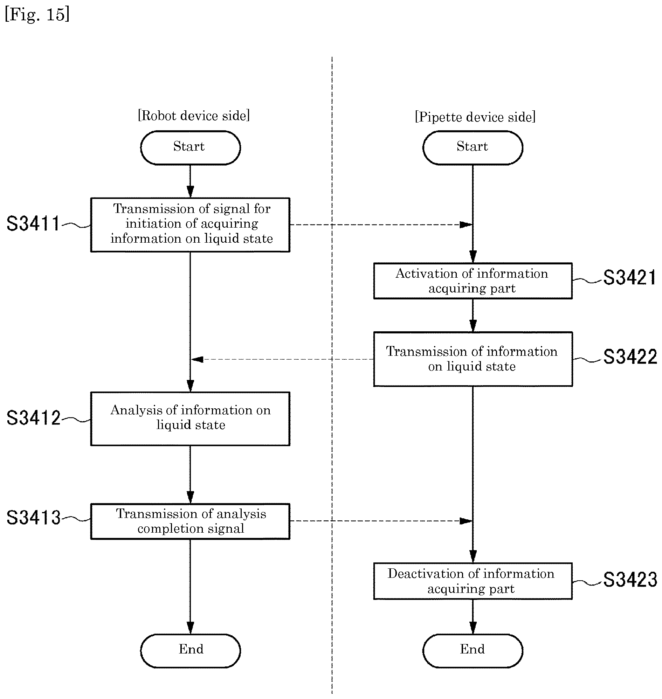

Fig. 15 is a flowchart showing the summary of the step for acquiring the information on liquid state S34. In the step S34, the robot device 1c transmits a signal for initiation of acquisition of the information on liquid state to the pipette device 2c (Fig. 15, S3411). In the pipette device 2c, the control part 23 activates the information acquiring part 26c (Fig. 15, S3421). On acquiring the information on liquid state, the signal transmitting part 27 in the pipette device 2c transmits the information on liquid state to the robot device 1c (Fig. 15, S3422).

Among the sensors in the information acquiring part 26c, it is possible to detect the pressure change in tip T, for example, with an internal pressure sensor 262. For example, if the liquid contains air bubbles, the pressure in the tip T changes more significantly as compared to the case where it contains no air bubble. It is thus possible to acquire information on the presence of air bubble in the liquid by detecting the change in internal pressure. If a highly viscous liquid is withdrawn or discharged, the pressure change in the tip T is also different from the case where the liquid is less viscous. It is thus possible to acquire the information on liquid viscosity by detecting the change in internal pressure of the tip T. It is also possible with an image sensor 263 to detect liquid turbidity, liquid absorbance, liquid fluorescence intensity, and contamination of the liquid by foreign materials.

When at least part of the tip connecting part 25c is made of a conductive material and the tip T is also made of a conductive material, the tip T functions as an electrode, and thus, it is possible to make the liquid processing system D3 measure liquid temperature, pH, and others. As for the information on liquid, the sensor described above may transmit the detected value itself to the robot device 1c as information. Alternatively, the detected value or the like may be transmitted to the robot device 1c, after it is converted to other information, such as the presence of air bubbles or foreign matters, in the information acquiring part 26c.

The robot device 1c that has received the information analyzes the information on liquid state in the analytical part 17 (Fig. 15, S3412). The analytical part 17 can analyze only one piece of information, such as turbidity, or multiple pieces of information, such as turbidity and temperature, in combination, among the information on liquid state. A known analytical method may be used for the analysis by the analytical part 17. The program used in the analysis by the analytical part 17 may be stored in the memory part 16.

After the analysis in the analytical part 17 is completed, the robot device 1c transmits an analysis completion signal to the pipette device 2c (Fig. 15, S3413) and the control part 23 in the pipette device 2c deactivates the information acquiring part 26c (Fig. 15, S3423).

In the liquid processing system D3, the analytical results are stored, for example, in the memory part 16 and the user can utilize the analytical results at a proper time. It is also possible to monitor liquid state and store the analytical results as history by placing a step for acquiring the information on liquid state S34 multiple times in multiple steps during the liquid processing by the liquid processing system D3.

Further in the liquid processing system D3, it is possible to make the program on which the control part 15 of the robot device 1c executes alter the operation of the robot device 1c according to the analytical results. For example, when the liquid is found to contain air bubbles in an amount more than the standard value after analysis, it is possible to make the liquid processing system D3 discard the liquid withdrawn into the tip T and carry out the liquid withdrawal step S33 again. Alternatively, for example when foreign matters are detected in one of the multiple liquid samples processed, it is possible to alter the operation of the liquid processing system D3 to remove the sample from the samples for liquid processing in the step downstream of the step for acquiring the information on liquid state S34.

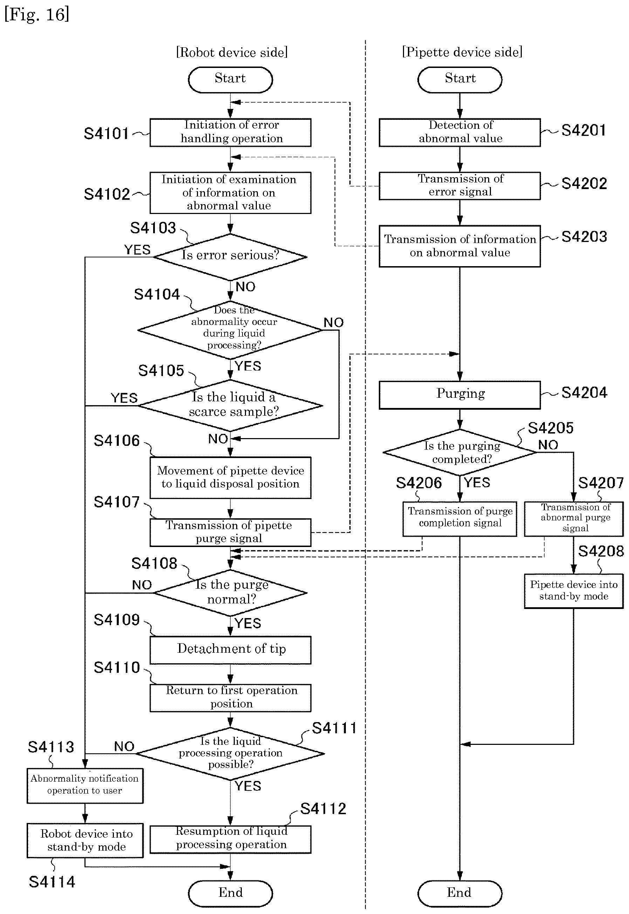

In the liquid processing system D3, it is also possible to detect error that may occur during liquid processing in the liquid processing system and make the robot device 1c execute an operation for error handling by utilizing the information on liquid state obtained using one or more kinds of the sensors described above. Fig. 16 is a flowchart showing an example of the error handling method in the liquid processing system D3. The error handling method will be described with reference to Fig. 16.

As shown in Fig. 16, first when the pipette device 2c detects an abnormal value (Fig. 16, S4201), the pipette device 2c transmits an error signal (Fig. 16, S4202). Information on the abnormal value is transmitted with the error signal to the robot device 1c (Fig. 16, S4203). The information on abnormal value includes, for example, the item of which the abnormal value is detected and the value thereof, the state of the pipette device 2c when the abnormal value is detected, and the like. Specifically, they are, for example, items monitored by the various sensors described above, such as liquid temperature, turbidity, pH, and viscosity, and the values thereof. The abnormal value can be detected by comparing for example the value detected by the various sensors described above with the predetermined standard. The information on abnormal value transmitted to the robot device 1c may be stored, for example, in the memory part 16. In the robot device 1c, logs concerning error handling operation may be stored for example in the memory part 16, as exemplified in Fig. 16.

In the robot device 1c that has received the error signal, the control part 15 starts error handling operation (Fig. 16, S4101). The control part 15 begins to examine the information on abnormal value received (Fig. 16, S4102). First in the examination, seriousness of the error is examined (Fig. 16, S4103). For example, when air bubbles are contained in an amount within the standard range, the error is decided to be not serious. Alternatively, when the amount of the air bubbles is not within the standard range, the error is decided to be serious. If the error is decided to be serious, the robot device 1c executes an abnormality notification operation to the user (Fig. 16, S4113) and the robot device 1c enters into the stand-by mode (Fig. 16, S4114).

Alternatively, if the error is decided to be not serious, the robot device 1c examines the state of the pipette device 2c when the abnormality is observed (Fig. 16, S4104). After the examination, if the time when the abnormality is observed is not during liquid processing, the robot device 1c moves the pipette device 2c to the liquid disposal position (Fig. 16, S4106). Alternatively, if the time when the abnormality is observed is during liquid processing by the pipette device 2c, the robot device 1c examines whether the liquid processed is scarce (Fig. 16, S4105). The information on whether the liquid is scarce or not may be stored, for example, in the memory part 16. If the liquid processed is decided to be scarce, the robot device 1c executes an abnormality notification operation to the user (Fig. 16, S4113) and the robot device 1c enters into the stand-by mode (Fig. 16, S4114). If the liquid is decided to be not scarce, the robot device 1c moves the pipette device 2c to the liquid disposal position (Fig. 16, S4106).

After the robot device 1c moves the pipette device 2c to the liquid disposal position, it transmits a signal to make the pipette device 2c execute "purging" for discharge of the liquid in the tip T by repeated liquid discharge and withdrawal (Fig. 16, S4107). On receiving the signal from the robot device 1c, the pipette device 2c executes the purging by activating the driving part 21 (Fig. 16, S4204). After the purging, the pipette device 2c examines whether the purging is completed (Fig. 16, S4205). It is possible to determine whether the purging is completed based on the values or the like detected by the various sensors installed in the information acquiring part 26c.

In the pipette device 2c, if the control part 23 decides that the purging is completed, the pipette device 2c transmits a purge completion signal to the robot device 1c (Fig. 16, S4206). Alternatively, if it decides that purging is not completed, the pipette device 2c transmits an abnormal purge signal to the robot device 1c (Fig. 16, S4207) and the pipette device 2c enters into the stand-by mode (Fig. 16, S4208).

Depending on the signal sent from the pipette device 2c, i.e., depending on whether it is a purge completion signal or an abnormal purge signal, the robot device 1c alters its operation (Fig. 16, S4108). On receiving the abnormal purge signal, the robot device 1c executes an abnormality notification operation to the user (Fig. 16, S4113) and the robot device 1c enters into the stand-by mode (Fig. 16, S4114). On receiving the purge completion signal, the robot device 1c conducts an operation to remove the tip T connected to the tip connecting part 25c (Fig. 16, S4109) and move the pipette device 2c to the position where the liquid processing operation started (Fig. 16, S4110).

The robot device 1c examines whether it is possible to resume liquid processing operation (Fig. 16, S4111). If it is found that the resumption is possible, the robot device 1c resumes the liquid processing operation (Fig. 16, S4112). Alternatively, if it is found that the resumption is impossible, the robot device 1c executes an error notification operation to the user (Fig. 16, S4113) and the robot device 1c enters into the stand-by mode (Fig. 16, S4114).

The error handling method above has been described with reference to an example where abnormality in liquid state is detected. However, when displacement in position of the plunger 211 or abnormality in operation of the driving part 21, for example, is detected by the information acquiring part 26c, the pipette device 2c may transmit an error signal to the robot device 1c. The pipette device 2c may transmit the number of abnormal operations in driving part 21 which is acquired in the information acquiring part 26c to the robot device 1c as error information. In the liquid processing system D3, it is possible to program previously the operations of the robot device 1c and the pipette device 2c so that the liquid processing system D3 executes error handling operations according to these error signals and error information.

The liquid processing system D3 in the third embodiment of the present invention described above can acquire the information on liquid state, when the information acquiring part 26c has multiple kinds of sensors. By using the information on liquid state, the robot device 1c can handle errors generated during liquid processing operation in cooperation with the pipette device 2c. Such error handling is useful for improvement of the accuracy of liquid processing of sample or the like in the liquid processing by the robot device 1c that conducts complicated operations. Other advantageous effects of the liquid processing system D3 in the present embodiment are the same as those of the liquid processing system D1 of the first embodiment described above.

According to the present technology, it is possible to conduct a high-accuracy pipetting operation many times rapidly, even with a small amount of liquid, immediately after an instruction is given to the pipette device. It is also possible to conduct pipetting operation at a place isolated from people by using radio communication and thus, to conduct the pipetting operation under severe environment and to handle hazardous samples. It is also possible to make the pipetting operation unmanned.

The present technology is applicable to various operations performed in research laboratories such as movement and opening/closing of a container and agitation of samples and culture solutions. It is also possible to utilize various apparatuses present in research laboratories more effectively by applying the present technology.

### Reference Signs List

- D1, D11, D2, and D3:: Liquid processing system
- T:: Tip
- 1:: Robot part
- 1a and 1c:: Robot device
- 1b:: Control panel
- 1d:: General-purpose computer
- 11:: Arm part
- 111:: Claw part
- 112a and 112b:: Joint
- 12:: (Robot device) signal receiving part
- 13:: (Robot device) signal transmitting part
- 14:: Body part
- 15:: (Robot device) control part
- 16:: Memory part
- 17:: Analytical part
- 18:: Input part
- 19:: Display part
- 2a, 2b, 2c, and 2d:: Pipette device
- 21:: Driving part
- 211:: Plunger
- 22:: (Pipette device) signal receiving part
- 23:: (Pipette device) control part
- 24a, 24b, and 24c:: Case
- 25a and 25c:: Tip connecting part
- 26a, 26b, and 26c:: Information acquiring part
- 261:: External pressure sensor
- 262:: Internal pressure sensor
- 263:: Image sensor
- 264:: Distance sensor
- 27:: (Pipette device) signal transmitting part
- 281:: Holding part
- 282:: Ejector button
- 283:: Withdrawal button
- 284:: Discharge button
- 311:: Measuring pipette

## Claims

1. A pipette device held by a robot device, comprising
a driving part for withdrawing and/or discharging a liquid,
a signal receiving part for receiving a signal from the robot device, and
a control part for controlling the driving part according to the signal.

2. The pipette device according to Claim 1, comprising
a tip connecting part for connecting a tip to be in contact with the liquid,
an information acquiring part for acquiring information on the position of
the tip in the state where it is connected to the tip connecting part and information on the state of the driving part, and
a signal transmitting part for transmitting the information on the position of
the tip and the information on the state of the driving part to the robot device.

3. The pipette device according to Claim 2, wherein
the driving part has a plunger and
the information on the state of the driving part includes information on the position of the plunger.

4. The pipette device according to Claim 2 or 3, wherein
the information on the position of the tip is based on the distance between
the tip and any one or more articles present in the range in which the tip is movable by the robot device.

5. The pipette device according to any one of Claims 2 to 4, wherein
the information acquiring part has an internal pressure sensor for detecting
the pressure applied into the tip.

6. The pipette device according to any one of Claims 2 to 5, wherein
the information acquiring part has a pressure sensor for detecting the pressure applied to the surface of the tip connecting part in contact with the tip.

7. The pipette device according to any one of Claims 2 to 6, wherein
the information acquiring part acquires the information on liquid state and
the signal transmitting part transmits the information on liquid to the robot device.

8. The pipette device according to any one of Claims 2 to 7, wherein
the rate of withdrawing the liquid into the tip and/or
the rate of discharging the liquid contained in the tip from the tip are/is controlled based on the signal and the information on the state of the driving part.

9. The pipette device according to any one of Claims 1 to 8, wherein
the timing of the liquid withdrawal and/or discharge is controlled by the signal.

10. The pipette device according to any one of Claims 1 to 9, wherein
the control part controls the driving part by radio communication.

11. A liquid processing system having a robot device and a pipette device held by the robot device,
the pipette device comprising
a driving part for withdrawing and/or discharging a liquid,
a signal receiving part for receiving a signal from the robot device, and
a control part for controlling the driving part according to the signal.

12. The liquid processing system according to Claim 11, wherein
the pipette device additionally comprises
a tip connecting part for connecting a tip to be in contact with the liquid,
an information acquiring part for acquiring information on the position of
the tip in the state where it is connected to the tip connecting part and information on the state of the driving part, and
a signal transmitting part for transmitting the information on the position of
the tip and the information on the state of the driving part to the robot device, and
the operation of the robot device is controlled based on the information on the position of the tip and the information on the state of the driving part.

13. The liquid processing system according to Claim 11 or 12, wherein
the robot device has an arm part and
the arm part has multiple joints.

14. The liquid processing system according to Claim 13, wherein
the robot device has a control panel and a computer.

15. The liquid processing system according to Claim 14, wherein
the computer comprises one or more parts selected from the group consisting of an input part, a signal transmitting part, a signal receiving part, a display part, a control part, and a memory part.
